# EUROPEAN PATENT SPECIFICATION

(11) **EP 1 113 544 B1**
(45) Date of publication and mention of the grant of the patent: **12.12.2007**
(21) Application number: 00610141.4
(22) Date of filing: 22.12.2000
(51) Int. Cl.: H02B 1/06, H04Q 1/02

(54) **An electrical distributor board**
Ein elektrisches Schaltfeld
Un tableau de distribution électrique

(30) Priority: 28.12.1999 DK 186399
(43) Date of publication of application: 04.07.2001
(73) Proprietor: Schneider Electric Danmark A/S, 2750 Ballerup (DK)
(72) Inventor: Nielsen, Jens Fogh, 2650 Hvidovre (DK); Jensen, Per, 2770 Kastrup (DK)
(74) Representative: Wittrup, Flemming

(56) References cited:
- US-A- 4 861 287
- US-A- 4 932 051

## Description

The invention relates to an electrical distributor board comprising a base plate, a cover jacket and a lid for receiving electrical components, said parts being dimensioned in accordance with a standardized modular system.

The invention is useful in connection with the art which is described e.g. in WO 97/19543 or Danish Patent Application No. 1530/1998. In the latter prior art, each signal outlet in a building is connected to a distributor board of the above-mentioned type, which is also connected to signals from a distributor of telephone signals, TV/video/audio signals and/or HUB/data signals.

From US 4 932 051 is known a network interface solely for telephone use.

Such a distributor board of the first mentioned art is normally available from manufacturers who also supply other electrical installation equipment e.g. for buildings. The invention is not restricted to buildings, but will be explained below in connection with this preferred field of use. In buildings, all forms of electrical installation boards are typically provided in the same room, and to achieve a uniform appearance and to simplify mounting there are certain specifications or standards for the physical properties of the individual components. A well-known standard is the so-called DIN standard, which lays down modular measures for the width/height/length of the components which are mounted in the electrical distributor board.

The invention relates to the type of distributor boards where a main distribution frame may be provided e.g. by means of so-called patch cables, but such cables or other forms of exchangeable/switchable signal connections between the components in the board take up so much space that with the known modular measures of boards and components there is not sufficient room for the distributor cables between the components and the lid. Therefore, it has previously not been possible to establish a main distribution frame board with a lid which resembles/has the same outer modular measures as other standardized installation equipment, which is found in the control room in large houses or e.g. in the scullery of small houses.

The object of the invention is to provide a system of electrical components to provide an electrical distributor board which may be used as a main distribution frame board, and which, in terms of appearance, particularly with respect to external dimensions, totally resembles the other forms of electrical boards in the vicinity of which the main distribution frame board is to be arranged.

This object is achieved by characterised part of claim 1.

In the event that electrical coupling means are present on the front of the electrical components, the invention overcomes the prejudice that all types of electrical components must have the same constructional height in accordance with standard modular measures. Precisely by increasing the distance between the lid and the front of the components it is ensured that the electrical coupling means may be arranged on the front and still leave sufficient space for the main distribution frame connections.

According to the invention, however, it is not necessary to make the electrical coupling means with a reduced modular depth. The electrical coupling means may also be arranged on the sides of the coupling units. The main distribution frame connections may either be concealed by the cover jacket when it is flush with the fronts, or be exposed if the cover jacket is retracted. The cover jacket need not be plane, but may be made in several levels. Typically, the electrical components extend through the cover jacket so that the front of the components is approximately flush with the cover jacket. In this preferred embodiment, the fronts of the components will be retracted relatively to standard, so that the main distribution frame connections are accessible between the lid and the cover jacket.

In a main distribution frame board, e.g. for use in connection with the art which is known from Danish Patent Application No. 1530/1998, there are usually a large number of passive components and a smaller number of active components. The passive components typically comprise very few electrical circuits, and therefore there is no need at all for the modular height which the standards usually prescribe. On the other hand, the active components may contain some electrical circuits for signal amplification/filtering. In a further embodiment of the invention, the last-mentioned increase in the modular width is avoided in that only a portion of the electrical component has a reduced constructional height, thereby making room for the electrical coupling means, while another portion may have a standard constructional height and thereby make better room for more electrical circuits. This also makes it easier to achieve uniform modular length and width measures for the active and passive coupling boxes.

The electrical coupling means may be arranged on the electrical components such that the patch cables (or corresponding signal connections) extend straight ahead toward the lid. This embodiment requires most space, but the space requirement may be reduced in that the electrical coupling means are arranged such that the wires extend obliquely relative to the lid and thereby do not extend as far toward the internal side of the lid.

In an embodiment, the coupling means may extend at an oblique angle of about 45° relative to the lid. Alternatively, the coupling means may extend in parallel with the lid especially in the embodiments in which the coupling means are disposed on the sides of the coupling units. The invention is also advantageous when using angular plugs which requires slightly more space than straight plugs.

The invention will be explained more fully by the following description of some embodiments with reference to the drawing, in which
fig. 1 shows an exploded view of an embodiment of the invention,
fig. 2 shows the parts of fig. 1, apart from a lid, in an assembled state,
fig. 3 shows a section through the embodiment shown in fig. 2,
fig. 4 shows a section through another embodiment of the invention, while
fig. 5 shows a section through a further embodiment of the invention.

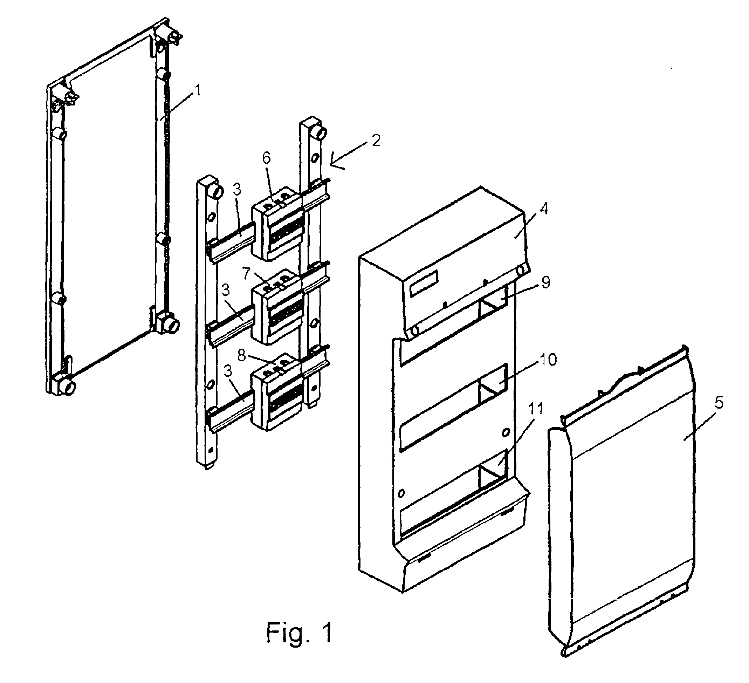

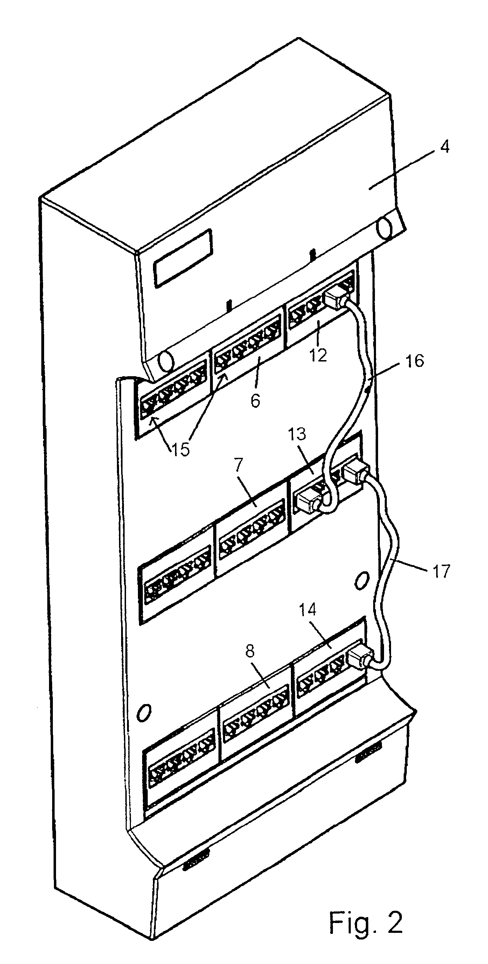

Fig. 1 shows a bottom frame 1 which is adapted to be attached to a base, and which is adapted to carry a base plate 2, which consists of a grating with mounting rails 3. Also provided are a cover jacket 4 and a lid 5 which is adapted to be hinged to the cover jacket 4. Electrical components 6, 7 and 8 are provided on the rails 3. The rails 3 have a mutual modular distance, and the electrical components 6, 7 and 8 also have modular length and width measures so that they may be arranged closely packed, as appears from fig. 2, with the front of some of the electrical components extending through slots 9, 10 and 11, respectively, in the cover jacket 4.

Fig. 2 shows the parts of fig. 1 in an assembled state, but with the lid 5 omitted. The components 6, 7 and 8 of fig. 1 are also shown together with six other components e.g. 12, 13 and 14. In the shown embodiment, each of the electrical components comprises four electrical coupling means which are designed by the reference numeral 15. Two of the electrical coupling means in the electrical components 12 and 13 are interconnected by means of a signal conductor 16, e.g. of the patch cable type. Another of the electrical coupling means in the electrical component 13 is connected to one of the electrical coupling means in the electrical component 14 via a signal conductor 17.

In practice there are many signal conductors which connect the electrical coupling means to one another. Preferably, the electrical components in the central row, such as 7 and 13, are so-called active components, while the electrical components in the uppermost and lowermost rows are passive components. This should be taken to mean that each of the active components is adapted to receive electrical signals of a specific type, such as telephone/TV/video/audio or Hub/data signals. The signals are transferred by means of the signal conductors 16 and 17 from the active units to selected ones of the passive units, which are typically connected to their respective signal outlets in a building via an installation in the building. If e.g. the active component 13 is adapted to handle TV signals, TV signals may be transferred by means of the signal conductors 16 and 17 to the passive electrical components 12 and 14, whereby TV signals are carried out to those of the signal outlets of the building which are connected to the passive components 12 and 14. In a fully mounted state, the board shown in fig. 2 thus serves as a main distribution frame board comprising a plurality of signal conductors which may be moved such that the signal outlets in the building receive the type of electrical signals which is determined by the position of the signal conductors in the main distribution frame board.

Boards having the structure shown in fig. 1 for receiving group switches, earth-leak circuit breakers, throw-over relays/clocks, etc. are known from ordinary electrical installations. This form of electrical equipment is normally comprised by certain specifications or standards for the dimensions of the individual components. A well-known standard is the co-called DIN standard which lays down modular measures of the width, height and length of the components which are mounted in the electrical board. According to the DIN standard, the front of the electrical components is positioned so close to the internal side of the lid that there is no room for the signal conductors 16 and 17 with associated plugs, and therefore it has previously not been possible to build a main distribution frame board which visually conforms to other electrical boards and has a lid which resembles/has the same outer dimensions as the above-mentioned standardized installation equipment.

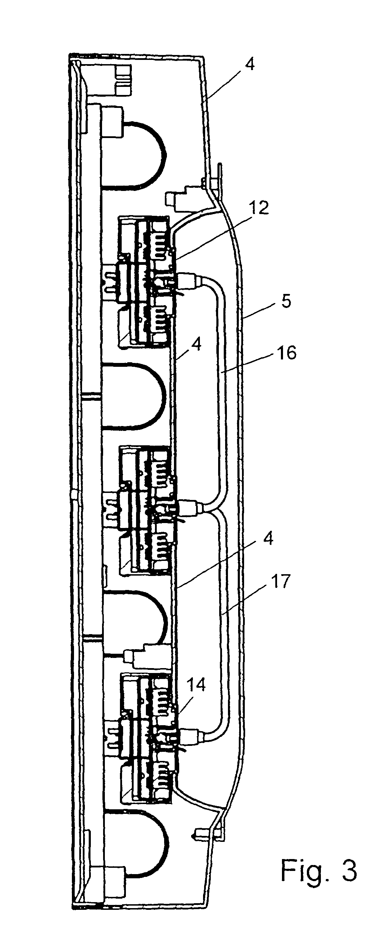

According to the invention, this prejudice relative to the depth of the electrical components is overcome in that at least some of the electrical coupling means are retracted relative to the internal side of the lid, e.g. like in the embodiment shown in fig. 2, which is shown in section in fig. 3.

Normally, the electrical components 12, 13 and 14 would extend almost out to the internal side of the lid 5 and thus would not leave space for the connection conductors 16 and 17. In the embodiment shown in fig. 3, the electrical coupling means are arranged on the front of the electrical components 12, 13 and 14, so that the depth of these components is smaller than the depth dimension in accordance with the standard. This leaves sufficient space for the signal conductors between the electrical components and the lid 5. In the embodiment shown in figs. 2 and 3, some of the electrical components extend through the cover jacket 4 so that the front of the electrical components is substantially flush with the outer side of the cover jacket.

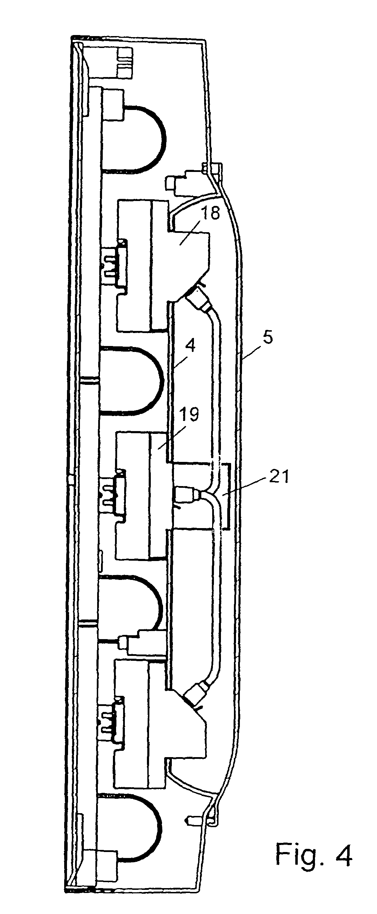

As will appear from fig. 3, the electrical coupling means extend in a direction toward the lid 5. In the embodiment shown in fig. 4, the coupling means 19 in the central row correspond to what is shown in fig. 2, while the coupling means in the uppermost (18) and lowermost (19) rows extend at an oblique angle, e.g. 45° relative to the lid and the cover plate. The active component may be configured such that there are just electrical coupling means in half the width, and that the component in the other half, as shown in fig. 4 at 21, can extend almost out to the lid. It will also be possible to make room for four electrical coupling means by arranging them two and two opposite each other.

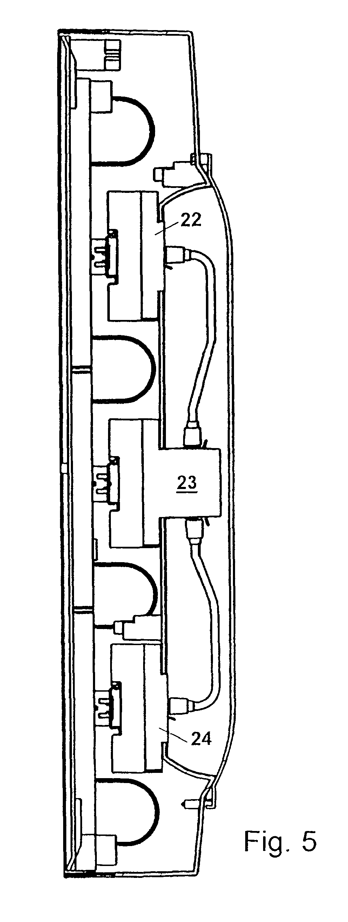

In the embodiment shown in fig. 5, the electrical coupling units 22 and 24 in the uppermost and lowermost rows are of the same type as those which are shown at 12 and 14 in fig. 2. Now and then the space requirement in the active components may be great to make room for the necessary electrical circuits, and with the embodiment shown in fig. 5 the part of the active electrical component 22 that protrudes through the cover jacket 4 extends close to the lid 5 and can hereby perhaps comply with the usual standard for the depth of the component. On the other hand, the electrical coupling means are directed upward and downwards, respectively, so that the main distribution frame may be established. When the active components are arranged in the central row and the passive ones in the uppermost and lowermost rows, there will normally be no need for some wires to intersect the central row, but in the event that this is nevertheless necessary, the outermost part of the component 23, which faces toward the lid 5, may have a slightly smaller width and thus leave channels for transverse conductors.

## Claims

1. A system of electrical components for being mounted on a base plate (2), which serves as support for the components, **characterised in that** the system comprises first electrical components having front that has a predetermined distance from the component support and comprises other electrical components (6,12, 21, 23) for the construction of a board area of a main distribution frame type, wherein the other components (12) have coupling means (15) for receiving signal conductors (16, 17) for providing distribution frame connections said coupling means being arranged such that the distribution frame connections are caused to be located behind the front of the first components (21).

2. A system according to claim 1, **characterised in that** the first electrical components are selected from among a group of components that comprises group switches, earth-leak circuit breakers and throw-over relays/clocks.

3. A system according to claim 1, **characterised in that** the other electrical components are selected from among a group of components that comprises telephone components, TV components, video components and HUB/data signal components.

4. A system according to claim 1, **characterised in that** the component support comprises a number of mounting rails (3) that are located in a common plane and at mutual modular distances.

5. A system according to claim 4, **characterised in that** a number of mounting rails (3) are secured to a bottom frame (1) for a distributor board.

6. A system according to claim 5, **characterised in that** a cover jacket (4) is provided that is supported by the bottom frame (1) and has slots (9, 10, 11) for receiving the electrical components (6, 7, 8).

7. A system according to claim 6, **characterised in that** the cover jacket (4) is flush with the front of at least some of the electrical components.

8. A system according to claim 6, **characterised in that** at least some of the electrical components (18) protrude beyond the cover jacket (4).

9. A system according to claims 4-8, **characterised in that** a lid (5) is provided that is configured for covering the electrical components (6, 12, 21, 23), so as to leave precisely sufficient space for the first electrical components behind the lid (5).

10. A system according to claim 9, **characterised in that** a board area with first and other electrical components being covered by a number of lids.

11. A system according to claim 10, **characterised in that** the lids are provided in a common plane.

12. A system according to claim 1, **characterised in that** the orientation and location of the sockets on the other components are adapted in relation to the electrical plugs used.

## Patentansprüche

1. System von elektrischen Komponenten zur Montage auf einer Basisplatte (2), die als Halterung für die Komponenten dient, **dadurch gekennzeichnet, dass** das System erste elektrische Komponenten mit einer Vorderseite, die einen vorbestimmten Abstand von der Komponentenhalterung aufweist, umfasst und andere elektrische Komponenten (6, 12, 21, 23) für die Konstruktion eines Tafelbereichs eines Hauptverteilerrahmentyps umfasst, wobei die anderen Komponenten (12) und Kopplungseinrichtungen (15) zur Aufnahme von Signalleitern (16, 17) zur Bereitstellung von Verteilerrahmenverbindungen umfasst, wobei die Kopplungseinrichtungen so angeordnet sind, dass bewirkt wird, dass sich die Verteilerrahmenverbindungen hinter der Vorderseite der ersten Komponenten (21) angeordnet sind.

2. System nach Anspruch 1, **dadurch gekennzeichnet, dass** die ersten elektrischen Komponenten aus einer Gruppe von Komponenten ausgewählt sind, die Gruppenschalter, Erdschlussschutzschalter und Umschaltrelais/-uhren umfasst.

3. System nach Anspruch 1, **dadurch gekennzeichnet, dass** die anderen elektrischen Komponenten aus einer Gruppe von Komponenten ausgewählt sind, die Fernsprechkomponenten, TV-Komponenten, Videokomponenten und HUB/Datensignal-Komponenten umfasst.

4. System nach Anspruch 1, **dadurch gekennzeichnet, dass** die Komponentenhalterung eine Anzahl von Montageschienen (3) umfasst, die in einer gemeinsamen Ebene und mit gegenseitigen modularen Abständen angeordnet sind.

5. System nach Anspruch 4, **dadurch gekennzeichnet, dass** eine Anzahl von Montageschienen (3) an einem Unterrahmen (1) für eine Verteilertafel gesichert ist.

6. System nach Anspruch 5, **dadurch gekennzeichnet, dass** eine Abdeckhaube (4) bereitgestellt wird, die durch den Unterrahmen (1) getragen wird und Schlitze (9, 10, 11) aufweist, um die elektrischen Komponenten (6, 7, 8) aufzunehmen.

7. System nach Anspruch 6, **dadurch gekennzeichnet, dass** die Abdeckhaube (4) mit der Vorderseite von mindestens einigen der elektrischen Komponenten bündig ist.

8. System nach Anspruch 6, **dadurch gekennzeichnet, dass** mindestens einige der elektrischen Komponenten (18) über die Abdeckhaube (4) hinaus vorstehen.

9. System nach den Ansprüchen 4-8, **dadurch gekennzeichnet, dass** ein Deckel (5) vorgesehen ist, der konfiguriert ist, um die elektrischen Komponenten (6, 12, 21, 23) abzudecken, so dass gerade ausreichend Raum für die ersten elektrischen Komponenten hinter dem Deckel (5) gelassen wird.

10. System nach Anspruch 9, **dadurch gekennzeichnet, dass** ein Tafelbereich mit ersten und anderen elektrischen Komponenten durch eine Anzahl von Deckeln bedeckt wird.

11. System nach Anspruch 10, **dadurch gekennzeichnet, dass** die Deckel in einer gemeinsamen Ebene vorgesehen sind.

12. System nach Anspruch 1, **dadurch gekennzeichnet, dass** die Orientierung und Stelle der Steckdosen auf den anderen Komponenten in Bezug zu den elektrischen Steckern, die verwendet werden, angepasst sind.

## Revendications

1. Système de composants électriques destinés à être montés sur une plaque de base (2) servant de support pour les composants, **caractérisé en ce que** le système comprend des premiers composants électriques comprenant une partie frontale à une distance prédéterminée du support de composants, et comprend d'autres composants électriques (6, 12, 21, 23) pour la construction d'une zone de tableau d'un type de répartiteur principal, dans lequel les autres composants (12) comprenant des moyens de couplage (15) pour recevoir des conducteurs de signal (16, 17) pour assurer des connexions du répartiteur, lesdits moyens de couplage étant agencés de telle sorte que les connexions du répartiteur soient situées derrière la partie frontale des premiers composants (21).

2. Système selon la revendication 1, **caractérisé en ce que** les premiers composants électriques sont sélectionnés parmi un groupe de composants comprenant des commutateurs de groupe, des disjoncteurs de mise à la terre et des relais/horloges à deux directions.

3. Système selon la revendication 1, **caractérisé en ce que** les autres composants électriques sont sélectionnés parmi un groupe de composants comprenant des composants téléphoniques, des composants de télévision, des composants vidéo et des composants de signal HUB/données.

4. Système selon la revendication 1, **caractérisé en ce que** le support de composant comprend plusieurs rails de montage (3) situés dans un plan commun et à des distances modulaires mutuelles.

5. Système selon la revendication 4, **caractérisé en ce que** plusieurs rails de montage (3) sont fixés sur une structure inférieure (1) pour un tableau de distribution.

6. Système selon la revendication 5, **caractérisé en ce qu'**une gaine de couverture (4) est prévue, supportée par la structure inférieure (1) et comprend des fentes (9, 10, 11) destinées à recevoir les composants électriques (6, 7, 8).

7. Système selon la revendication 6, **caractérisé en ce que** la gaine de couverture (4) est affleurante avec la partie frontale d'au moins une partie des composants électriques.

8. Système selon la revendication 6, **caractérisé en ce qu'**au moins une partie des composants électriques (18) sont saillants au-delà de la gaine de couverture (4).

9. Système selon l'une quelconque des revendications 4 à 8, **caractérisé en ce qu'**un couvercle (5) est prévu, configuré pour couvrir les composants électriques (6, 12, 21, 23), de façon à laisser précisément un espace suffisant pour les premiers composants électriques derrière le couvercle (5).

10. Système selon la revendication 9, **caractérisé en ce qu'**une zone de tableau avec les premiers et les autres composants électriques est recouverte de plusieurs couvercles.

11. Système selon la revendication 10, **caractérisé en ce que** les couvercles sont disposés dans un plan commun.

12. Système selon la revendication 1, **caractérisé en ce que** l'orientation et l'emplacement des prises sur les autres composants sont adaptés aux prises électriques utilisées.
